# EUROPEAN PATENT APPLICATION

(11) **EP 4 249 296 A1**
(43) Date of publication of application: **27.09.2023**
(21) Application number: 22164567.4
(22) Date of filing: 25.03.2022
(51) Int. Cl.: B60G 17/0195, B60W 40/00

(54) **METHOD FOR CONTROLLING VEHICLE PERFORMANCE BY ESTIMATING THE CENTER OF GRAVITY OF A LOADED VEHICLE**

(71) Applicant: VOLVO TRUCK CORPORATION, 405 08 Göteborg (SE)
(72) Inventor: SUBRAMANIAN, Chidambaram, 27407 NC, Greensboro (US)
(74) Representative: Germain Maureau

(57) **Abstract**

The present disclosure relates to a method for controlling performance of a vehicle by estimating a center of gravity of the vehicle (2), the method comprising: receiving by a vehicle control unit (VCU), load parameters describing features of a load in the vehicle, collecting, by the vehicle control unit (VCU), a load weight measure of a load in the vehicle, from a load sensor (LS), when the vehicle is in a steady state; and computing, by the vehicle control unit (VCU), using a neural network (ANN), longitudinal and lateral positions and height of a center of gravity (GC) of the vehicle, based on the load parameters and the load weight measure.

## Description

### TECHNICAL FIELD

The present disclosure relates to the field of vehicle monitoring systems. More particularly, the present disclosure relates to a method for controlling vehicle performance by estimating the center of gravity of a loaded vehicle. The vehicle may be an automobile or a truck. In addition, the vehicle may tow a trailer. The estimation of the location of the center of gravity may also be applied to a loaded trailer.

### BACKGROUND

At present, for improving security on roads, the vehicles integrate more and more control systems, such as an electronic braking system, an electronic stability control, a vehicle motion management, and/or an active suspension. These control systems are developed for an ideal load case. However, a vehicle may be more or less loaded than an ideal load case. For example, the load may comprise different density materials and/or may be placed in different locations in the vehicle. In transport trucks, the density, location, and amount of transported loads can vary and/or change at very large magnitudes, leading to drastic changes in the performance of these control systems. Further, multiple axles raises additional challenges in designing the behaviors of these control systems.

Thus, there is a need for improving the performance of vehicle controls such as braking control, stability control, vehicle motion management and active suspension.

It appears that the performance of such controls depends on the knowledge of the location of the center of gravity of the vehicle. It further appears that the wear of the tires and the fuel consumption can be reduced by improving the performance of these controls.

Some systems may integrate an estimation of the location of the center of gravity to improve performance of control systems, which may reduce wear of the tires and/or fuel consumption. However, such estimation appears to be inaccurate and insufficient, especially when the position and density of the load change drastically. In addition, these systems require dynamic data provided by sensors that are not available in all vehicles.

Thus, there is a need for accurately estimating the location of the center of gravity of a vehicle, such as to improve security and/or the performance of other on-board systems (e.g., such as active suspension, braking control, stability control, and/or vehicle motion management. There is also a need to reduce the wear of tires and/or fuel consumption of the vehicles. There is also a need for easily equipping existing vehicles with a system for estimating the location of the center of gravity of the vehicle.

### SUMMARY

The present disclosure is related to a method for controlling performance of a vehicle, the method comprising: receiving by a vehicle control unit, load parameters describing features of a load in the vehicle; collecting, by the vehicle control unit, a load weight measure of a load in the vehicle, from a load sensor, when the vehicle is in a steady state; computing, by the vehicle control unit, using a neural network, longitudinal and lateral positions and height of a center of gravity of the vehicle, based on the load parameters and the load weight measure; and using the lateral positions and height of the center of gravity of the vehicle to adjust control of at least one of vehicle brakes, vehicle engine torque, vehicle stability and vehicle suspension.

Thanks to the use of a neural network processing static parameters related to the load in the vehicle, the position of the center of gravity of the vehicle can be determined without requiring sensors providing dynamic measurements in the vehicle. Since, the neural network does not need to be connected to sensors, it can be easily integrated into existing vehicles, especially into vehicles already equipped with an embedded computer.

According to an embodiment, the load weight measure comprises at least one of: a load weight measured in the vehicle by a load sensor, axle load weights measured on axles, and an image of the load in the vehicle provided by an image sensor positioned in the vehicle to provide images of the load in or on the vehicle.

Thus, the position of the center of gravity of the vehicle can be determined more accurately when the number of load sensors installed in the vehicle increases.

According to an embodiment, the load parameters comprise at least one of a type of load, and a loading ratio of a volume occupied by the load in an available volume for loads in the vehicle.

According to an embodiment, the method further comprises collecting, by the vehicle control unit, dynamic signals from sensors when the vehicle is subjected to a movement, the longitudinal, lateral positions and height of a center of gravity of the vehicle being computed using the dynamic signals.

Thus the position of the center of gravity of the vehicle can be determined more accurately when the number of load sensors installed in the vehicle increases.

According to an embodiment, the dynamic signals comprise at least one of: a load weight measured in the vehicle by a load sensor, axle load weights measured on axles of the vehicle, and wheel load weights measured on wheels of the vehicle by wheel load sensors, accelerations measured in the vehicle by acceleration sensors.

The acquisition of dynamic data related to the dynamic behavior of the vehicle allows to estimate the position of the center of gravity more accurately.

According to an embodiment, the method further comprises storing vehicle parameters describing features of the vehicle in a memory of the vehicle, the longitudinal and lateral positions and height of the center of gravity of the vehicle, being computed based on the vehicle parameters.

According to an embodiment, the vehicle parameters comprise at least one of: a vehicle type or model, a distance between a front axle and a rear axle of the vehicle, a distance between the wheels on a same axle of the vehicle, and an unladen weight of the vehicle.

According to an embodiment, the method further comprises: comparing the position of the center or gravity of the vehicle to a three-dimension vehicle model; and transmitting a warning message if the position of the center or gravity is not within the three-dimension vehicle model.

Thus the method allows to identify abnormal results, to estimate reasons for such abnormal results, and detect dangerous loading conditions of the vehicle.

According to an embodiment, the method further comprises providing the position of the center or gravity of the vehicle to other systems of the vehicle.

According to an embodiment, the neural network is based on an algorithm selected in a set comprising: deep learning algorithms using fine tree species classification, Gaussian Vector, or Ensemble Bagged decision trees, or using supervised learning models, and deep neural networks using Levenberg-Marquardt's method, a Bayesian regularization method or a scaled conjugate method.

According to an embodiment, the method further comprises: a test phase for acquiring training data sets each comprising values of the input parameters of the neural network and a corresponding position of the center of gravity measured in a loaded vehicle, and a training phase of the neural network during which coefficients of the neural network are determined using the training data sets.

Thus, the neural network can be trained and generated for a set of different vehicles.

Embodiments may also relate to a system for computing a position of a center of gravity of a vehicle, the system comprising a computing unit configured to implement the method as the above-defined.

Embodiments may also relate to a vehicle comprising a computing unit configured to implement the method as the above-defined.

### BRIEF DESCRIPTION OF THE DRAWINGS

The foregoing and other purposes, features, aspects and advantages will become apparent from the following detailed description of embodiments, given by way of illustration and not limitation, with reference to the accompanying drawings, in which the same reference refer to similar elements or to elements having similar functions, and in which:
Figures 1 and 2 are schematic top view and lateral view of vehicles, showing an electronic system installed in the vehicle, according to an embodiment;
Figure 3 is a block diagram of a part of the electronic system installed in the vehicle, according to an embodiment;
Figures 4A and 4B are schematic front view and side view of a four-wheel vehicle, showing the position of the center of gravity of the vehicle;
Figures 5A and 5B are block diagrams of a part of a computing system installed in the vehicle, according to an embodiment;
Figure 6 is a block diagram showing steps of a method for estimating and using the location of the center of gravity of a vehicle, according to an embodiment.

### DETAILED DESCRIPTION

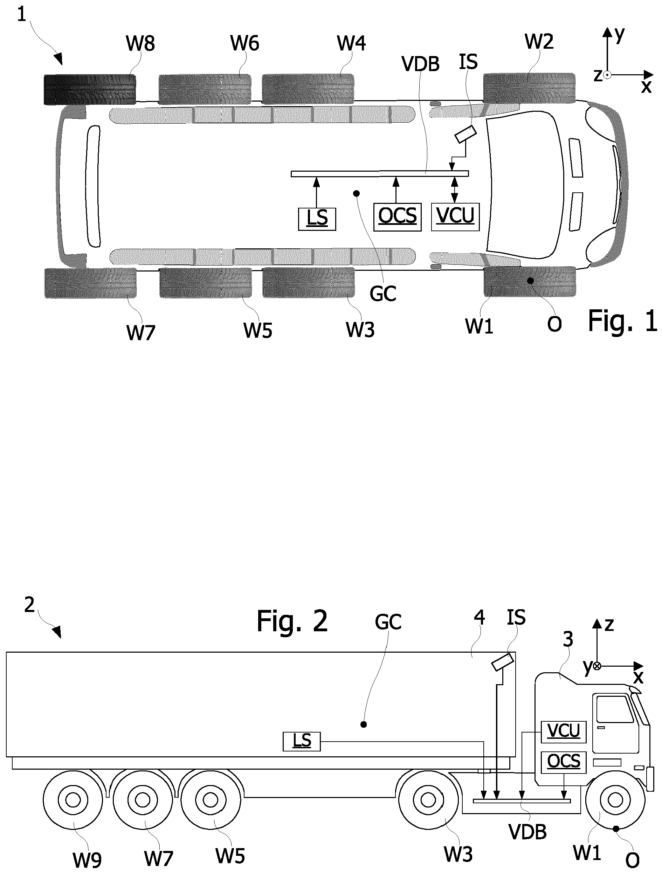

Figure 1 shows an unarticulated vehicle 1 comprising a plurality of wheel W1-W8 including at least two drive wheels. The vehicle 1 comprises a vehicle control unit VCU and other control systems OCS connected to an address and data bus VDB. The vehicle can further comprise a load sensor LS for measuring the load of the vehicle. The load sensor may be connected to the bus VDB. The bus VDB can be of the type CAN (Controller Area Network).

Figure 2 shows an articulated vehicle 2 comprising a tractor 3 and a trailer 4 fixed to the tractor by a hitch 5. The vehicle 2 can also be equipped as the vehicle 1 with the vehicle control unit VCU, the other control systems OCS and a load sensor LS, the unit VCU, the control systems OCS and the load sensor LS being connected to an address and data bus VDB.

According to an embodiment, an image sensor such as a camera IS is connected to the bus ADB and positioned in the vehicle to provide images of the load inside or on the vehicle to the unit VCU.

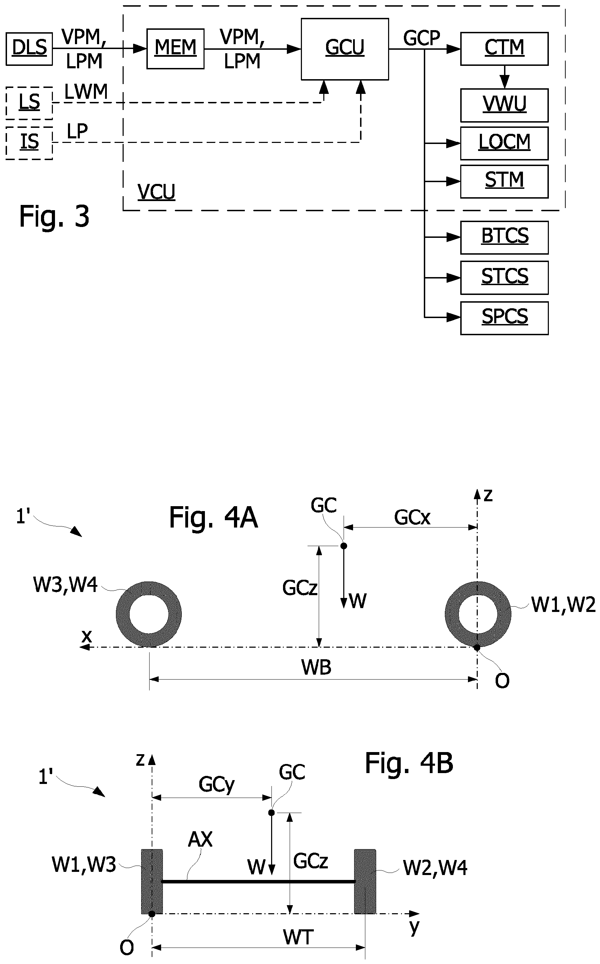

Figure 3 represents a part of the vehicle control unit VCU, according to an embodiment. The vehicle control unit VCU comprises a gravity center computing unit GCU configured to estimate a position GCP of the center of gravity of the vehicle 1, 2. The gravity center computing unit GCU receives static vehicle parameters VPM, and static load parameters LPM related to the load in the vehicle. The parameters VPM, LPM are stored in a memory MEM of the unit VCU. These parameters can be received by the control unit VCU via a user control interface DLS by an operator such as the driver of the vehicle.

The gravity center computing unit GCU is configured to compute the position GCP of the center of gravity GC of the vehicle 1, 2. This position comprises coordinates GCx, GCy of the center of gravity in a plane Oxy parallel to the ground of the vehicle, and a coordinate or height GCz of the center of gravity of the vehicle defined for example from the ground of the vehicle.

Figure 4A shows side wheels W1, W3 of a four-wheel or two-axle vehicle 1'. Figure 4B shows the front wheels W1, W2 of the vehicle 1'. In Figures 4A and 4B, the vehicle 1' comprises a front axle connecting left and right front wheels W1, W2 and a rear axle connecting left and right rear wheels W3, W4. The tires act together as a supporting point for the complete vehicle mass on the ground plane Oxy of the vehicle. The origin point O of the plane Oxy can be chosen e.g., as the middle point of the surface of the front right wheel W1, in contact with the ground. Figures 4A and 4B further show the coordinates GCx, GCY and GCz of the center of gravity GC of the vehicle in the spatial coordinate system Oxyz.

According to an embodiment, the static vehicle parameters VPM can comprise:
a vehicle type,
a wheelbase WB (e.g., distance between a front axle and a rear axle of the vehicle),
a vehicle track WT 'e.g., distance between the wheels on a same axle of the vehicle), and/or
an unladen weight of the vehicle, etc.

The static load parameters can comprise:
a type of load,
a global load weight LWM >of the load in the vehicle,
a loading ratio (e.g. between 0 and 100%), of the volume occupied by the load in the available volume for loads in the vehicle, and/or
an image LP of the full load in the vehicle (e.g., provided by the camera IS installed at a fixed point in the vehicle).

The vehicle type can be selected in a vehicle type list including for example:
tractor cab-over-engine with a short cab,
tractor cab-over-engine with a long cab,
tractor with a short cab,
tractor with a medium cab,
tractor with a long sleeper cab,
trailer,
semi-trailer,
semi-trailer with a flat-bed trailer,
semi-trailer with a concrete pumper trailer, and/or
semi-trailer with an open top trailer, etc.

The type of load can also be selected in a load type list including for example:
food,
clothes,
waste material,
auto hauler,
bulk transport,
generic,
live animals,
high density material,
low density material,
metal,
wood,
plastic,
construction equipment, and/or
exclusive heavy load, etc.

According an embodiment, the gravity center computing unit GCU comprises computing means based on a neural network, to estimate the coordinates GCx, GCy, GCz of the center of gravity of the vehicle 1, 1', 2 from the static vehicle parameters VPM, and the static load parameters LPM. The neural network can be based on any algorithm such as deep learning algorithms using fine tree species classification, or using Gaussian Vector decision trees, Ensemble bagged decision trees, supervised learning models (e.g., Support Vector Machines), and/or deep neural network (e.g., using Levenberg-Marquardt method, Bayesian regularization method and/or scaled conjugate method), etc. The number of layers and neurons of the neural network is adjusted as a function of the chosen algorithm and the available computing resources, and further as a function of a required quality or accuracy of the estimations of the position of the center of gravity.

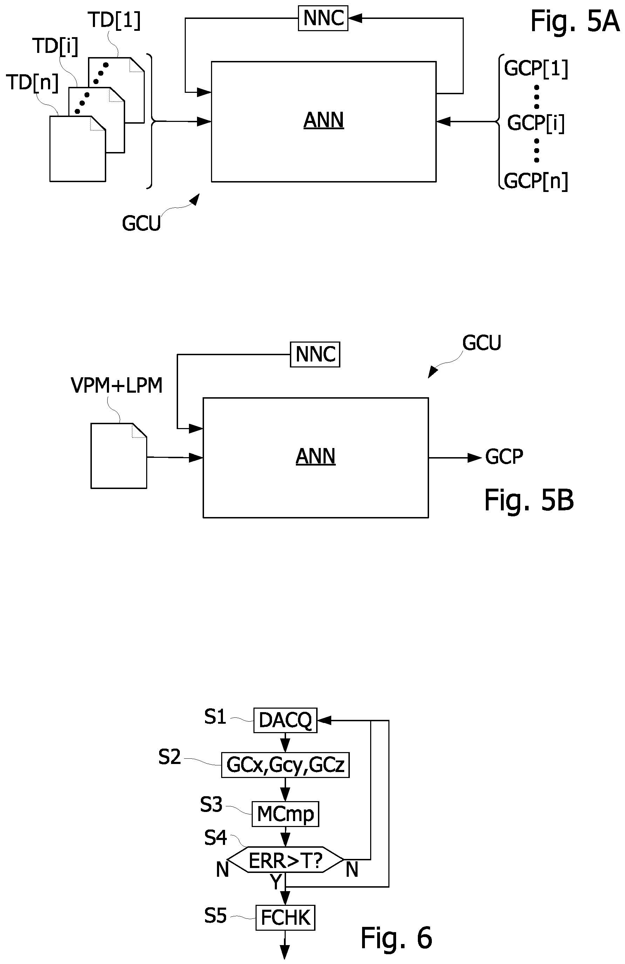

Figure 5A, 5B show the neural network ANN of the gravity center computing unit GCU. Figure 5A illustrates a training phase of the neural network ANN and figure 5B illustrates the neural network ANN when it computes the position GCP of the center of gravity GC of the vehicle 1, 1', 2 from the vehicle parameters VPM and the load parameters LPM.

Coefficients NNC of layers of the neural network ANN are computed during a training phase using training data TD. The training data comprise training data sets, each training data set comprising an input data set TD[1], ... TD[i], ... TD[n] and corresponding output data GCP[1], ... GCP[i], ... GCP[n], i.e. the coordinates GCx, GCy, GCz of the center of gravity GC of the vehicle 1, 2. The input data set TD[i] of each training data set comprises a value set of the input parameters VPM, LMP of the gravity center computing unit GCU, as above-defined the static vehicle parameters VPM and the static load parameters LPM.

During the training phase illustrated by Figure 5A, the neural network ANN is executed using the input data set TD[i] and the output data GCP[i] of a training data set, to adjust the values of coefficients NNC of the neural network ANN such that the computed output data GCP computed by the neural network ANN correspond to the output data GCP[i] of the training data set.

The training data are generated to reflect all possible combinations of the input parameters VPM, LPM, LWM, LP. Thus, the training data sets are generated by using different vehicles corresponding to the types specified above, in combination with different loads of the types specified above, and different values of the other parameters, and by measuring the position of the center of gravity of the vehicle. In other words, for the inputs belonging to a finite set of different discrete values, such as the types of vehicles and loads, the training data comprise training sets for each possible combination of one type of vehicle and one type of load. For numeric input data, the training data comprise training sets for e.g. a minimum value, an intermediary value and a maximum value. For example, the loading ratio can be set in the training data to the values 0%, 15%, 30%, 50%, 70%, 85%, 100%. For image data from the image sensor IS, the training data for one type of vehicle and one type of load can comprise several tenths of images of different load quantities and positions in the vehicle, each image corresponding to a respective position of the center of gravity of the vehicle.

According to an embodiment, since the gravity center computing unit GCU is finally installed in one vehicle, the neural network ANN can be trained for the corresponding vehicle model. Therefore, it could be not necessary to provide the vehicle parameters VPM to the gravity center computing unit GCU, since these parameters do not vary. Thus a vehicle manufacturer can generate and train a gravity center computing unit GCU for each of its vehicle models in which the position of the center of gravity should be estimated. If one vehicle model is considered and if this particular model can be loaded with eight different types of loads at seven loading ratios, the neural network ANN requires 56 training data sets to be defined.

During an operational phase illustrated by Figure 5B, the input parameters VPM, LPM are provided to the neural network ANN which estimates the position GCP of the center of gravity GC of the vehicle, using the coefficients NNC determined during the training phase.

Figure 6 illustrates steps S1 to S5 of a method implemented by the control unit VCU for estimating the position of the center of gravity of a vehicle. In step S1, parameters VPM, LPM are acquired or inputted in the control unit VCU.

In step S2, the control unit VCU activates the gravity center computing unit CGU to compute the coordinates GCx, CGz, GCy of the center of gravity CG of the vehicle 1, 2, using the parameters VPM, LPM, LWM, LP acquired or introduced at step S1.

In step S3, the control unit VCU can control the position (GCx, GCy, GCz) of the center of gravity CG of the vehicle 1, 2, by comparing it with acceptable ranges defined by a three-dimension vehicle model.

In step S4, if the position of the center of gravity of the vehicle is outside the acceptable ranges, step S5 is performed to send a warning message to the module VWU. The module VWU processes the warning message and determines if the driver of the vehicle must be warned about an incorrect loading of the vehicle or a vehicle malfunction, as a function of the position of the center of gravity CG and possibly other parameters related to the vehicle.

For more accuracy on the estimation of the position GCP of the center of gravity GC of the loaded vehicle, the gravity center computing unit GCU can also be configured and trained to receive one or more of the following static parameters:
axle load weights of each axle of the vehicle, and/or
wheel load weights provided by wheel sensors.

Still for more accuracy on the estimation of the position GCP of the center of gravity GC of the loaded vehicle, the gravity center computing unit GCU can also be configured and trained to receive dynamic data such as:
dynamic data related to an acceleration of the vehicle provided by an acceleration sensor,
dynamic data related to variations of a weight measurement signal of the load in the vehicle provided by a sensor LS,
dynamic data related to variations of weight measurement signals of the load in the vehicle provided by axle load weights sensors disposed on the axles of the vehicle, respectively, and/or
dynamic data related to variations of weight measurement signals of the load in the vehicle provided by wheel load weights sensors disposed on the wheels of the vehicle, respectively.

However, the usage of dynamic data leads to make the neural network ANN more complex that would require a huge quantity of training data. Therefore, there is a trade-off between accuracy in the determination of the center of gravity of a vehicle and the complexity of the neural network ANN and required quantity of training data.

According to an embodiment, the vehicle control unit VCU can further comprise a localization unit LOCM and a state estimating unit STM for estimating the state of the vehicle 1, 2.

The state estimating unit STM is configured to estimate parameters such as a yaw rate and slip angles of the vehicle, and other vehicle dynamic states that cannot directly be measured. To this purpose, the unit STM can receive the positions (GCx, GCy, GCz) of the center of gravity of the vehicle 1, 2 and possibly other measurements acquired by sensors of the vehicle.

The localization unit LOCM is configured to estimate geographical position and velocity of the vehicle 1, 2 without using a localization module for receiving signals from a global navigation satellite system. Further the localization unit LOCM can be configured to compute more accurate position and velocity of the vehicle 2 or separately of the tractor 3 and the trailer 4, using parameters from other units, such as accelerations. More particularly, the localization unit LOCM in the vehicle 1, 2 can be configured to proactively determine a safe turning radius from the position GCP of the center of gravity GC of the vehicle 1, 2. In fact, localization is highly needed in autonomous vehicles and satellite navigation data do not provide enough precision and may temporally be not received.

The position GCP (GCx, GCy, GCz) of the center of gravity of the vehicle 1, 2 can also be provided by the vehicle control unit VCU of the vehicle to other vehicle control systems OCS such as a brake and engine torque controller BTCS, a stability control system STCS and a suspension control system SPCS, via the bus VDB, for optimizing their control startegy to improve performance and safety.

The brake and engine torque controller BTCS of the vehicle 1, 2 can be configured to operate the brakes and the engine torque of the vehicle taking into account the estimated position GCP of the center of gravity GC of the vehicle 1, 2, to estimate a load on each tire during turning and braking and then to operate each of the brakes and the engine of the vehicle such that the corresponding tire keep its adherence to the ground or keeps a desired slip ratio.

The stability control system STCS of the vehicle 1, 2 can be configured to estimate a reference band and a limit at which the vehicle should operate for maximum cornering ability without rolling or yawing, using the estimated position GCP of the center of gravity GC.

The suspension control system SPCS of the vehicle 1, 2 can be configured to drive an active suspension such as suspension air bags to maintain a ride height or load on each wheel during cornering, braking and accelerating, using the estimated position GCP of the center of gravity GC.

The brake and engine torque control system BTCS and/or stability control system STCS and/or suspension control system SPCS can operate in a closed looped feedback to provide better traction and/or least rolling resistance and/or least brake and tire wear.

The above description of various embodiments is provided for purpose of description to one of ordinary skills in the related art. It is not intended to be exhaustive or to limit the scope of the present disclosure solely to the disclosed embodiments. Numerous alternatives or variations to the present disclosure will be apparent to those of ordinary skills in the related art. Accordingly, while some alternatives or embodiments have been presented specifically, other embodiments will be apparent or easily developed by those of ordinary skills in the related art. Limitations in the appended claims should be interpreted broadly based on the language used in the claims and such limitations should not be restricted to the specific examples described above.

In this respect, it is apparent to those of ordinary skills in the related art that the neural network can be generated and trained for a particular vehicle. Therefore, under these conditions, the neural network can operate without the vehicle parameters VPM.

## Claims

1. A method for controlling performance of a vehicle (1, 2), the method comprising:
receiving by a vehicle control unit (VCU), load parameters (LPM, LWM, LP) describing features of a load in the vehicle;
collecting, by the vehicle control unit (VCU), a load weight measure (LWM) of a load in the vehicle, from a load sensor (LS), when the vehicle is in a steady state;
computing, by the vehicle control unit (VCU), using a neural network (ANN), longitudinal and lateral positions and height (GCx, GCy, GCz) of a center of gravity (GC) of the vehicle, based on the load parameters (LPM) and the load weight measure; and
using the lateral positions and height of the center of gravity of the vehicle to adjust control of at least one of vehicle brakes, vehicle engine torque, vehicle stability and vehicle suspension.

2. The method according to claim 1, wherein the load weight measure (SLW) comprises at least one of:
a load weight (LWM) measured in the vehicle by a load sensor (LP),
axle load weights measured on axles, and
an image (LP) of the load in the vehicle provided by an image sensor (IS) positioned in the vehicle to provide images of the load in or on the vehicle.

3. The method according to one of claims 1 and 2, wherein the load parameters (LPM) comprise at least one of a type of load, and a loading ratio of a volume occupied by the load in an available volume for loads in the vehicle.

4. The method according to one of claims 1 to 3, further comprising collecting, by the vehicle control unit (VCU), dynamic signals from sensors (LS) when the vehicle is subjected to a movement, the longitudinal, lateral positions and height (GCx, GCy, GCz) of a center of gravity (GC) of the vehicle being computed using the dynamic signals.

5. The method of claim 4, wherein the dynamic signals comprise at least one of:
a load weight measured in the vehicle by a load sensor (LS),
axle load weights measured on axles (AX) of the vehicle, and
wheel load weights measured on wheels of the vehicle by wheel load sensors, accelerations measured in the vehicle by acceleration sensors.

6. The method according to one of claims 1 to 5, further comprising storing vehicle parameters (VPM) describing features of the vehicle in a memory (MEM) of the vehicle, the longitudinal and lateral positions and height (GCx, GCy, GCz) of the center of gravity (GC) of the vehicle, being computed based on the vehicle parameters.

7. The method according to claim 6, wherein the vehicle parameters (VPM) comprise at least one of:
- a vehicle type or model,
- a distance (WB) between a front axle and a rear axle of the vehicle,
- a distance (WT) between the wheels on a same axle of the vehicle, and
- an unladen weight of the vehicle.

8. The method according to one of claims 1 to 7, further comprising:
comparing the position (GCx, GCy, GCz) of the center or gravity (CG) of the vehicle (1, 1', 2) to a three-dimension vehicle model; and
transmitting a warning message if the position of the center or gravity is not within the three-dimension vehicle model.

9. The method according to one of claims 1 to 8, further comprising providing the position (GCx, GCy, GCz) of the center or gravity (CG) of the vehicle (1, 1', 2) to other systems (OCS) of the vehicle (1, 2).

10. The method according to one of claims 1 to 9, wherein the neural network (ANN) is based on an algorithm selected in a set comprising:
deep learning algorithms using fine tree species classification, Gaussian Vector, or Ensemble Bagged decision trees, or using supervised learning models, and
deep neural networks using Levenberg-Marquardt's method, a Bayesian regularization method or a scaled conjugate method.

11. The method according to one of claims 1 to 10, further comprising:
a test phase for acquiring training data sets (TD) each comprising values of the input parameters (VPM, LPM) of the neural network (ANN) and a corresponding position of the center of gravity measured in a loaded vehicle; and
a training phase of the neural network during which coefficients (NNC) of the neural network are determined using the training data sets.

12. A system for controlling performance of a vehicle (1, 1', 2), the system comprising a computing unit (VCU) configured to implement the method of one of claims 1 to 11.

13. A vehicle (1, 2) comprising a computing unit (VCU) configured to implement the method of one of claims 1 to 11.

## Amended claims

### Amended claims in accordance with Rule 137(2) EPC.

1. A method for controlling performance of a vehicle (1, 2), the method comprising:
receiving by a vehicle control unit (VCU), load parameters (LPM, LP) describing features of a load in the vehicle;
collecting, by the vehicle control unit (VCU), a load weight measure (LWM) of a load in the vehicle, from a load sensor (LS), when the vehicle is in a steady state;
computing, by the vehicle control unit (VCU), longitudinal and lateral positions and height (GCx, GCy, GCz) of a center of gravity (GC) of the vehicle, using a neural network (ANN) trained for a model of the vehicle and receiving the load parameters (LPM) and the load weight measure, and providing the longitudinal and lateral positions and height of the center of gravity; and
using the longitudinal and lateral positions and height of the center of gravity of the vehicle to adjust control of at least one of vehicle brakes, vehicle engine torque, vehicle stability and vehicle suspension.

2. The method according to claim 1, wherein the load weight measure (SLW) comprises at least one of:
a load weight (LWM) measured in the vehicle by a load sensor (LP),
axle load weights measured on axles, and
an image (LP) of the load in the vehicle provided by an image sensor (IS) positioned in the vehicle to provide images of the load in or on the vehicle.

3. The method according to one of claims 1 and 2, wherein the load parameters (LPM) comprise at least one of a type of load, and a loading ratio of a volume occupied by the load in an available volume for loads in the vehicle.

4. The method according to one of claims 1 to 3, further comprising collecting, by the vehicle control unit (VCU), dynamic signals from sensors (LS) when the vehicle is subjected to a movement, the longitudinal, lateral positions and height (GCx, GCy, GCz) of a center of gravity (GC) of the vehicle being computed using the dynamic signals.

5. The method of claim 4, wherein the dynamic signals comprise at least one of:
a load weight measured in the vehicle by a load sensor (LS),
axle load weights measured on axles (AX) of the vehicle, and
wheel load weights measured on wheels of the vehicle by wheel load sensors,
accelerations measured in the vehicle by acceleration sensors.

6. The method according to one of claims 1 to 5, further comprising storing vehicle parameters (VPM) describing features of the vehicle in a memory (MEM) of the vehicle, the longitudinal and lateral positions and height (GCx, GCy, GCz) of the center of gravity (GC) of the vehicle, being computed based on the vehicle parameters.

7. The method according to claim 6, wherein the vehicle parameters (VPM) comprise at least one of:
- a vehicle type or model,
- a distance (WB) between a front axle and a rear axle of the vehicle,
- a distance (WT) between the wheels on a same axle of the vehicle, and
- an unladen weight of the vehicle.

8. The method according to one of claims 1 to 7, further comprising:
comparing the position (GCx, GCy, GCz) of the center or gravity (CG) of the vehicle (1, 1', 2) to a three-dimension vehicle model; and
transmitting a warning message if the position of the center or gravity is not within the three-dimension vehicle model.

9. The method according to one of claims 1 to 8, further comprising providing the position (GCx, GCy, GCz) of the center or gravity (CG) of the vehicle (1, 1', 2) to other systems (OCS) of the vehicle (1, 2).

10. The method according to one of claims 1 to 9, wherein the neural network (ANN) is based on an algorithm selected in a set comprising:
deep learning algorithms using fine tree species classification, Gaussian Vector, or Ensemble Bagged decision trees, or using supervised learning models, and
deep neural networks using Levenberg-Marquardt's method, a Bayesian regularization method or a scaled conjugate method.

11. The method according to one of claims 1 to 10, further comprising:
a test phase for acquiring training data sets (TD) each comprising values of the input parameters (VPM, LPM) of the neural network (ANN) and a corresponding position of the center of gravity measured in a loaded vehicle; and
a training phase of the neural network during which coefficients (NNC) of the neural network are determined using the training data sets.

12. A system for controlling performance of a vehicle (1, 1', 2), the system comprising a computing unit (VCU) configured to implement the method of one of claims 1 to 11, a load sensor (LS) and at least one control unit (OCS, BTCS, STCS, SPCS) for adjusting at least one of a vehicle brake, a vehicle engine torque, a vehicle stability and a vehicle suspension.

13. A vehicle (1, 2) comprising a computing unit (VCU) configured to implement the method of one of claims 1 to 11.
